# FASCICULE DE BREVET EUROPEEN

(11) **EP 2 186 573 B1**
(45) Date de publication et mention de la délivrance du brevet: **04.01.2012**
(21) Numéro de dépôt: 09176226.0
(22) Date de dépôt: 17.11.2009
(51) Int. Cl.: B05B 7/16, A23B 7/153, A23B 7/158, B05B 7/24

(54) **Dispositif et procédé de thermonébulisation d'un liquide**
Vorrichtung und Verfahren zur Thermozerstäubung einer Flüssigkeit
Thermonebulising device for liquids and corresponding method

(30) Priorité: 18.11.2008 FR 0857830
(43) Date de publication de la demande: 19.05.2010
(73) Titulaire: XEDA INTERNATIONAL, 13670 Saint-Andiol (FR)
(72) Inventeur: Sardo, Alberto, 13160, CHATEAURENARD (FR)
(74) Mandataire: Blot, Philippe Robert Emile

(56) Documents cités:
- EP-A- 1 369 181
- WO-A-01/53741
- FR-A- 2 566 681
- FR-A- 2 791 910
- GB-A- 641 739
- US-A- 4 738 219
- US-A- 5 935 660

## Description

L'invention concerne en général la thermonébulisation des liquides.

Plus précisément, l'invention concerne selon un premier aspect un dispositif de thermonébulisation d'un liquide, du type comprenant :
- un ensemble de production d'un flux de gaz chaud sous pression, présentant une sortie de gaz chaud ;
- un conduit d'éjection, présentant une entrée de gaz chaud raccordée à la sortie de gaz chaud de l'ensemble de production, et une sortie d'éjection d'un brouillard de liquide ;
- une première source de liquide ;
- des moyens pour injecter dans le conduit d'éjection un flux dosé de liquide à partir de la première source de liquide.

Un tel dispositif est connu de FR 2 566 681, qui décrit que le liquide est injecté dans le conduit d'éjection par une pompe aspirant ce liquide dans un réservoir. Le flux de gaz est constitué par de l'air, chauffé par une résistance électrique.

Le document EP 1 369 181 A1 décrit un tel dispositif de thermonébulisation comprenant en outre une sonde permettant de détecter une variation de température, c'est-à-dire un dispositif selon le préambule de la revendication 1.

Il peut se produire des incendies sur ce type de machine de nébulisation, notamment en cas de désamorçage de la pompe.

Dans ce contexte, l'invention vise à proposer un dispositif de thermonébulisation dans lequel le risque d'incendie soit réduit.

A cette fin, l'invention porte sur un dispositif de thermonébulisation selon la revendication 1.

Le dispositif peut également présenter une ou plusieurs des caractéristiques ci-dessous, considérées individuellement ou selon toutes les combinaisons techniquement possibles :
- les moyens pour injecter dans le conduit d'éjection un flux dosé de liquide à partir de la première source de liquide comprennent un organe doseur de liquide, présentant une entrée d'aspiration de liquide raccordée à la première source de liquide et une sortie de refoulement de liquide raccordée à une entrée de liquide du conduit d'éjection, les moyens pour injecter dans le conduit d'éjection un flux de secours de liquide à partir de la seconde source de liquide comprenant un organe à vanne apte à sélectivement raccorder l'entrée d'aspiration de liquide de l'organe doseur à la seconde source de liquide ;
- la sonde est une sonde de température apte à mesurer la température courante du gaz dans le conduit d'éjection en aval de l'entrée de liquide ;
- le dispositif comprend un calculateur apte à recueillir la température courante du gaz mesurée par la sonde, à comparer cette température courante avec une valeur maximale prédéterminée, et à commander à l'organe à vanne de raccorder l'entrée d'aspiration de liquide de l'organe doseur à la seconde source de liquide quand la température courante est supérieure à ladite valeur maximale prédéterminée ;
- l'organe à vanne comprend une vanne trois voies comportant une première entrée de liquide raccordée à la première source de liquide, une seconde entrée de liquide raccordée à la seconde source de liquide et une sortie raccordée à l'entrée d'aspiration de liquide de l'organe doseur ;
- la première source de liquide est une source d'un liquide contenant un agent chimique de traitement, la seconde source de liquide étant une source d'un liquide dépourvu dudit agent chimique de traitement ;
- la seconde source de liquide est une source d'eau ;
- l'ensemble de production d'un flux de gaz chaud sous pression comprend une soufflante, pourvue d'une entrée d'aspiration de gaz et d'une sortie de refoulement de gaz sous pression, et un organe de chauffage du gaz sous pression, présentant une entrée de gaz froid raccordée à la sortie de refoulement du ventilateur, et une sortie constituant la sortie de gaz chaud ; et
- la seconde source de liquide est un réservoir sensiblement étanche à l'air, les moyens pour injecter dans le conduit d'éjection un flux de secours de liquide à partir de la seconde source de liquide comprenant un conduit de mis sous pression raccordant la sortie de refoulement de la soufflante à un ciel de la seconde source de liquide, et un conduit d'injection raccordant la seconde source de liquide à une entrée de liquide du conduit d'éjection.

Selon un second aspect, l'invention concerne un procédé de thermonébulisation d'un liquide, ce procédé comprenant les étapes suivantes :
- créer un courant de gaz chaud sous pression ;
- injecter un flux de liquide dans le gaz chaud sous pression à partir d'une première source de liquide ;
   caractérisé par les étapes suivantes :
- détecter une interruption totale ou partielle du flux de liquide arrivant de la première source de liquide ;
- injecter un flux de liquide dans le gaz chaud sous pression à partir d'une seconde source de liquide quand une interruption totale ou partielle du flux de liquide arrivant de la première source de liquide est détectée.

D'autres caractéristiques et avantages de l'invention ressortiront de la description qui en est donnée ci-dessous, à titre indicatif et nullement limitatif, en référence aux figures annexées, parmi lesquelles,
- la figure 1 est une représentation schématique simplifiée d'un dispositif de thermonébulisation conforme à un premier mode de réalisation de l'invention,
- la figure 2 est une représentation similaire à celle de la figure 1, pour un second mode de réalisation de l'invention.

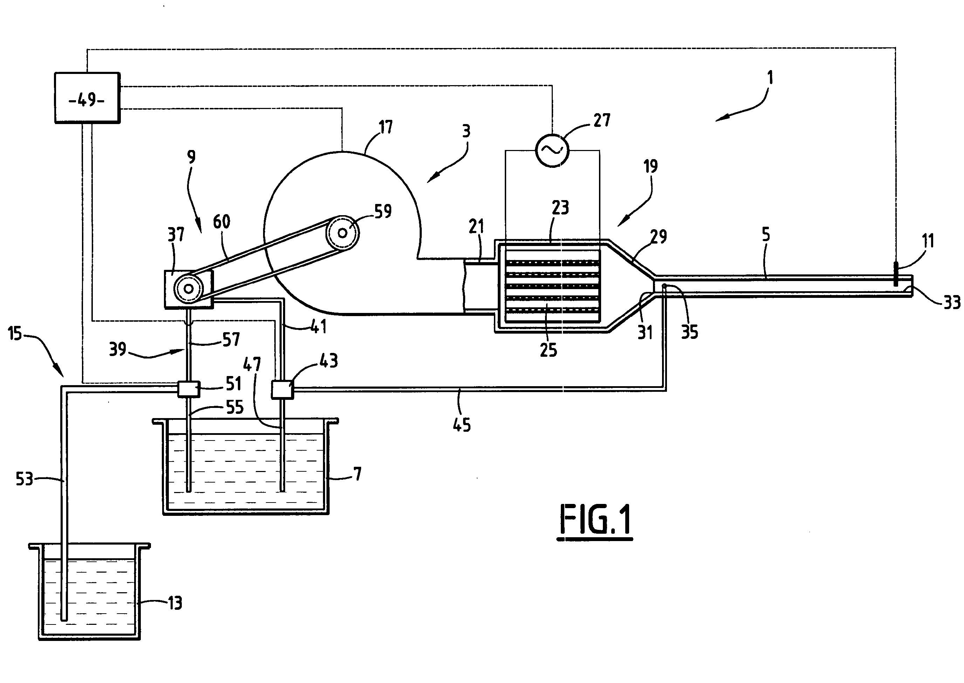

Le dispositif représenté sur la figure 1 est un dispositif de thermonébulisation destiné à produire un flux de gaz comportant un brouillard de liquide. Le brouillard de liquide comporte de très fines gouttelettes, au moins 90% des gouttelettes de préférence présentant un diamètre inférieur ou égal à 3 microns.

Un tel dispositif est typiquement prévu pour le traitement des fruits et légumes stockés dans des enceintes fermées, notamment des serres ou des enceintes de stockage.

Le liquide constituant le brouillard est typiquement une solution aqueuse comportant un agent chimique adapté pour le traitement des fruits et légumes. Cet agent chimique a par exemple une activité protectrice destinée à prolonger la conservation des fruits et légumes. Il peut présenter un effet antioxydant, un effet anti-germinatif et/ou un effet fongicide. De telles compositions sont décrites dans FR 2 728 142, FR 2 786 664 et FR 2 791 910.

Le dispositif de thermonébulisation 1 comprend :
- un ensemble 3 de production d'un flux de gaz chaud sous pression ;
- un conduit d'éjection 5 ;
- une première source 7 d'un liquide contenant un agent chimique de traitement ;
- des moyens 9 pour fournir au conduit d'éjection un flux dosé de liquide à partir de la première source 7 :
- une sonde 11 pour détecter une interruption totale ou partielle du flux dosé de liquide arrivant de la première source de liquide ;
- une seconde source 13 de liquide ;
- des moyens 15 pour fournir au conduit d'éjection un flux de secours de liquide à partir de la seconde source de liquide quand la sonde 11 détecte une interruption totale ou partielle du flux dosé de liquide arrivant de la première source de liquide 7.

L'ensemble de production 3 comporte une soufflante 17 et un organe de chauffage 19. La soufflante 17 présente une entrée d'aspiration d'air atmosphérique (non représentée) et une sortie 21 de refoulement d'air sous pression.

L'organe de chauffage 19 comporte une enveloppe 23, une résistance chauffante 25 et une alimentation électrique 27 raccordée électriquement à la résistance électrique 25. La résistance électrique 25 est située à l'intérieur de l'enveloppe 23. L'enveloppe 23 présente une entrée de gaz froid raccordée à la sortie 21 de refoulement de la soufflante, et un tronçon convergent 29 définissant une sortie de gaz chaud sous pression 31.

Le conduit d'éjection 5 est un conduit cylindrique rectiligne. Il est ouvert à ses deux extrémités. L'une des extrémités définie une entrée de gaz chaud raccordée à la sortie 31 de l'organe de chauffage. L'extrémité opposée définit une sortie d'éjection d'un flux de gaz chaud chargé d'un brouillard de liquide. Cette sortie est référencée 33. Par ailleurs, le conduit d'éjection comporte une entrée 35 de liquide située à proximité de l'entrée de gaz chaud.

La première source de liquide 7 est typiquement un réservoir rempli de liquide de traitement. Ce liquide est typiquement de l'eau contenant un agent chimique de traitement.

Les moyens 9 pour fournir au conduit d'éjection un flux dosé de liquide comprennent une pompe volumétrique 37, un conduit d'aspiration 39, un conduit de refoulement 41, une vanne trois voies 43 et un conduit de liaison 45. Le conduit d'aspiration 39 raccorde l'entrée d'aspiration de la pompe 37 au réservoir 7. Le conduit de refoulement 41 raccorde une sortie de refoulement de la pompe doseuse 37 à une entrée de la vanne trois voies 43. Le conduit de liaison 45 raccorde une première sortie de la vanne trois voies 43 à l'entrée de liquide 35 du conduit d'éjection. Par ailleurs, un conduit de retour 47 raccorde une seconde sortie de la vanne trois voies 43 au réservoir 7.

La sonde de température 11 est placée dans le conduit d'éjection 5, en aval de l'entrée de liquide 35. Elle est de préférence placée à proximité de la sortie d'éjection 33. Elle renseigne un calculateur 49.

La seconde source de liquide 13 est par exemple un réservoir rempli avec de l'eau. Cette eau ne comporte pas d'agent de traitement chimique.

Les moyens 15 pour fournir à l'entrée de liquide un flux de secours à partir de la seconde source de liquide comportent une vanne trois voies 51, intercalée sur le conduit d'aspiration 39, et un tuyau d'aspiration 53. Un premier tronçon 55 du conduit d'aspiration 39 raccorde le réservoir 7 à une entrée de la vanne trois voies 51. Un autre tronçon 57 du conduit d'aspiration raccorde une sortie de la vanne trois voies 51 à l'aspiration de la pompe doseuse 37. Le tuyau d'aspiration 53 raccorde la seconde source de liquide 13 à une seconde entrée de la vanne trois voies 51.

L'arbre 59 de la soufflante 17 est entraîné par un moteur électrique non représenté. Cet arbre 59 entraîne à son tour la pompe volumétrique 37, par exemple par l'intermédiaire d'une courroie 60 ou encore directement.

Le calculateur 49 est raccordé à la sonde de température 11, au générateur électrique 27, au moteur de la soufflante 17 et aux vannes trois voies 43 et 51. Le calculateur 49 est apte à piloter chacun de ces éléments.

La soufflante 17 présente entre le refoulement et l'aspiration une différence de pression comprise entre 0,20 10⁵ Pa et 0,30 10⁵ Pa, de préférence comprise entre 0,22 10⁵ Pa et 0,30 10⁵ Pa. Le débit de la soufflante varie entre 30 et 80 Nm³/h, de préférence entre 55 et 70 Nm³/h. Ainsi, la vitesse linéaire de l'air chaud à l'entrée du conduit 5 est comprise entre 160 et 400 m/s, de préférence entre 200 et 280 m/s. La résistance électrique 25 est dimensionnée pour être capable de chauffer l'air à une température comprise entre 550 et 750°C à l'entrée du conduit 5. De préférence, la résistance électrique 25 est dimensionnée pour chauffer l'air à une température comprise entre 600 et 700°C, et encore plus de préférence entre 600 et 650 °C. La puissance électrique de la résistance est comprise entre 5 et 20 kW, et vaut de préférence entre 7,5 et 10 kW.

A la sortie d'éjection du conduit 5, le brouillard de liquide comporte des gouttelettes présentant une température comprise entre 200 et 280°C, animées d'une vitesse linéaire comprise entre 110 et 140 m/s.

De manière à satisfaire ces conditions, il est possible de jouer, outre sur les paramètres décrits ci-dessus, sur les critères suivants :
- la longueur du conduit 5 ;
- le diamètre du conduit 5 ;
- le débit et la température du liquide injecté à l'entrée 35 du conduit 5.

Le diamètre du conduit 5 est généralement compris entre 12 et 25 mm, de préférence entre 15 et 20 mm, et encore de préférence entre 16 et 18 mm.

La longueur du conduit 5 est généralement comprise entre 300 et 1500 mm. Le débit d'injection de liquide en provenance de la première source de liquide 7 à l'entrée 35 du conduit 5 est généralement compris entre 5 et 30 litres par heure, de préférence entre 10 et 25 litres par heure, et encore de préférence entre 13 et 20 litres par heure. La température du liquide injecté dans le conduit 5 est généralement comprise entre 10 et 30°C, de préférence entre 15 et 25°C, et encore de préférence entre 20 et 25 °C.

Dans un exemple de réalisation, la soufflante 17 fournit une différence de pression entre l'aspiration et le refoulement valant 25 000 Pascal, et un débit de 60 Nm³/h. Le conduit 5 présente un diamètre de 18 mm et une longueur de 800 mm. La résistance électrique 25 présente une puissance électrique de 10 kW. La température de l'air chaud à l'entrée du conduit 5 est d'environ 600°C. La vitesse linéaire de l'air chaud à l'entrée du conduit 5 est d'environ 220 m/s. Le liquide est injecté à l'entrée 35 du conduit 5 à un débit de 15 litres par heure, et à une température de 20 à 25°C. On obtient à la sortie d'éjection 33 du conduit un brouillard de gouttelettes dont le diamètre moyen est de 0,4 microns. La vitesse linéaire des gouttelettes en sortie du conduit 5 est de 125 m/s et la température des gouttelettes est d'environ 240°C.

Le fonctionnement du dispositif de thermonébulisation ci-dessus va maintenant être décrit.

Au démarrage, le calculateur 49 commande à la vanne trois voies 43 d'isoler le conduit de liaison 45 et de mettre en communication le conduit de refoulement 41 et le conduit de retour 47. Par ailleurs, le calculateur 49 commande à la vanne trois voies 51 d'isoler le tuyau d'aspiration 53 et de mettre en communication les deux tronçons 55 et 57 du conduit d'aspiration 39. Le calculateur 49 commande le démarrage de la soufflante 17 et l'alimentation électrique de la résistance 25. La soufflante 17 aspire l'air atmosphérique et le refoule à travers l'organe de chauffage 19 jusqu'au conduit 5. La pompe doseuse 37 est entraînée par l'arbre 59 de la soufflante. Elle aspire la solution de traitement dans le réservoir 7 par l'intermédiaire du conduit d'aspiration 39 et le refoule vers le réservoir 7 via les conduits 41 et 47.

Quand la température mesurée par la sonde 11 dépasse une valeur minimum prédéterminée, par exemple 350°C, le calculateur 49 commande à la vanne trois voies 43 d'isoler le conduit de retour 47 et de mettre en communication le conduit de refoulement 41 avec le conduit de liaison 45. Le liquide de traitement aspiré par la pompe volumétrique 37 dans le réservoir 7 est refoulé par la pompe jusqu'à l'entrée 35. Ce liquide est alors injecté dans le flux de gaz chaud à plus de 600°C provenant de l'organe de chauffage. Le liquide est dispersé dans le flux de gaz chaud et fractionné en très fines gouttelettes. Une partie du liquide est éventuellement vaporisée. Sous l'effet de l'injection de liquide, le flux de gaz est refroidit, sa température passant d'environ 625°C à environ 240°C.

Le calculateur 49 surveille en permanence la température du flux de gaz chargé du brouillard de liquide en aval de l'entrée 35, par l'intermédiaire de la sonde 11.

Si le flux de liquide arrivant de la première source de liquide 7 s'interrompt totalement ou partiellement, la température mesurée par la sonde 11 augmente. Cette interruption peut résulter par exemple du fait que le réservoir 7 est vide, tout le liquide ayant déjà été injecté dans le conduit 5. Cette interruption peut également résulter du fait que le tronçon 55 du conduit d'aspiration est bouché, totalement ou partiellement. Du fait que le liquide est injecté en plus faible quantité, ou n'est plus injecté du tout dans le conduit 5, le flux de gaz n'est plus refroidit de la même façon, et la température du flux de gaz augmente au niveau de la sonde 11.

Quand le calculateur 49 détecte que la température mesurée par la sonde 11 dépasse une valeur maximum prédéterminée, par exemple 400°C, il commande à la vanne trois voies 51 d'isoler le tronçon 55 et de mettre en communication le tuyau d'aspiration 53 avec le tronçon 57.

Ainsi, la pompe volumétrique aspire l'eau contenue dans la seconde source de liquide, à savoir le réservoir 13.

La pompe 37 refoule l'eau par l'intermédiaire des conduits 41 et 45 jusqu'à l'entrée 35 du conduit d'éjection. Le débit de liquide venant de la seconde source de liquide 13 est le même que celui venant de la première source de liquide 7. La reprise de l'injection de liquide à l'intérieur du conduit 5 provoque un refroidissement des gaz chauds, qui sont de nouveau ramenés à une température d'environ 240°C.

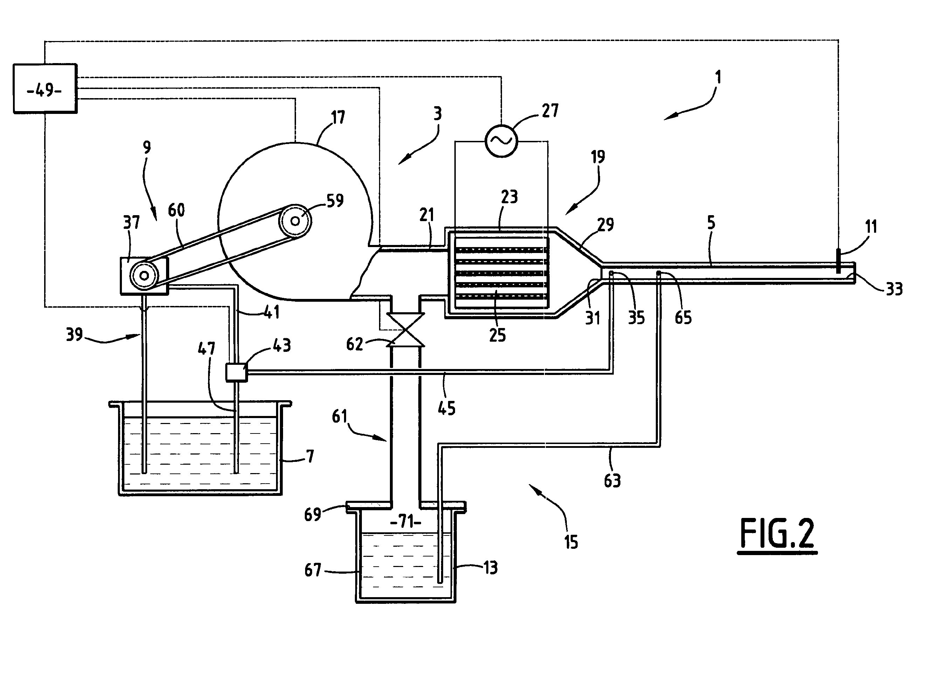

Un second mode de réalisation de l'invention va maintenant être décrit, en référence à la figure 2. Seuls les points par lesquels ce second mode de réalisation diffère du premier seront détaillés ci-dessous.

Les éléments identiques, ou assurant la même fonction, seront désignés par les mêmes références dans les deux modes de réalisation.

Les moyens 15 pour fournir au conduit d'éjection un flux de secours de liquide à partir de la seconde source de liquide 13 comportent dans le second mode de réalisation un conduit 61 de mise sous pression du réservoir 13, une électrovanne 62 intercalée sur le conduit 61, et un conduit d'injection 63 raccordant le réservoir 13 à une seconde entrée de liquide 65 du conduit d'éjection 5.

Le conduit 61 raccorde le refoulement de la soufflante 17 au ciel du réservoir 13. Ainsi, une extrémité amont du conduit 61 est raccordée à la sortie de refoulement 21 de la soufflante. L'extrémité avale du conduit 61 débouche dans le ciel du réservoir 13.

L'électrovanne 62 est une vanne tout ou rien, commandée par le calculateur 49. Elle est susceptible d'autoriser ou d'interdire la circulation d'air depuis le refoulement de la soufflante jusqu'au ciel du réservoir 13.

Dans ce second mode de réalisation, le réservoir 13 est un réservoir étanche à l'air. Il comporte par exemple une cuve 67 ouverte vers le haut, et un couvercle 69 permettant d'obturer la cuve 67. Des moyens d'étanchéité sont prévus entre le couvercle et la cuve, prévus pour empêcher les fuites d'air quand le réservoir 13 est maintenu à une pression au moins égale à la pression de refoulement de la soufflante 17. Le conduit 61 est piqué sur le couvercle 69. Par exemple, l'extrémité du conduit 61 est soudée sur le couvercle 69.

Une extrémité amont du conduit d'injection 63 traverse le couvercle 69 et plonge dans l'eau contenue dans le réservoir 13. Une étanchéité est réalisée entre le conduit 63 et le couvercle 69. Cette étanchéité est par exemple réalisée par soudure du conduit 63 sur le couvercle 69. Alternativement, une garniture d'étanchéité peut être interposée entre le conduit 63 et le couvercle 69.

Le réservoir 13 est partiellement rempli d'eau, la partie supérieure 71 du réservoir, encore appelée ciel, étant normalement remplie d'air.

La seconde entrée de liquide 65 du conduit d'éjection est située à proximité de l'entrée de gaz chaud, c'est-à-dire à proximité de la première entrée 35.

Le fonctionnement du dispositif de thermonébulisation conforme au second mode de réalisation de l'invention va maintenant être décrit.

Le démarrage est similaire à celui du dispositif conforme au premier mode de réalisation de l'invention, à l'exception du fait que le calculateur 49 commande à l'électrovanne 62 d'obturer le conduit de mise sous pression 61. Cette vanne 62 est maintenue fermée pendant le fonctionnement normal du dispositif de thermonébulisation, c'est-à-dire tant que le calculateur 49 ne détecte pas que la température mesurée par la sonde 11 dépasse la valeur maximale prédéterminée.

Quand le calculateur 49 au contraire détecte que la température mesurée par la sonde 11 dépasse ladite valeur maximum, il commande l'ouverture de l'électrovanne 62.

Le ciel 71 du réservoir 13 est alors mis en communication avec le refoulement de la soufflante 17. De ce fait, le liquide contenu est mis sous pression, puisque la pression régnant alors dans le ciel 71 correspond à la pression de refoulement de la soufflante 17.

L'eau contenue dans le réservoir 13 est refoulée par la pression vers le conduit d'injection 63. Cette eau est injectée dans le conduit 5 par la seconde entrée de liquide 65.

Il est à noter que la pression de l'air à l'intérieur du conduit d'éjection 5 est inférieure à la pression d'air à la sortie de refoulement 21 de la soufflante, du fait de la perte de charge se produisant dans l'organe de chauffage. Ainsi, la pression dans le ciel du réservoir 13 est supérieure à la pression à l'intérieur du conduit d'éjection 5. La section de passage du conduit d'injection 63 est dimensionnée pour que cette différence de pression permette un débit de liquide suffisant pour le refroidissement du flux de gaz chaud entrant dans le conduit 5.

Le dispositif de thermonébulisation décrit ci-dessus présente de multiples avantages.

Du fait qu'il comprend une sonde pour détecter une interruption totale ou partielle du flux dosé de liquide injecté dans le conduit d'éjection à partir de la première source de liquide, une seconde source de liquide, et des moyens pour injecter dans le conduit d'éjection un flux de secours de liquide à partir de la seconde source de liquide quand la sonde détecte une interruption totale ou partielle du flux dosé de liquide injecté dans le conduit d'éjection à partir de la première source de liquide, les risques d'incendie sont significativement réduits.

En effet, la seconde source de liquide prend le relais de la première source de liquide dès qu'il y a interruption du flux venant de la première source. Ainsi, le flux de gaz chaud traversant le conduit 5 ne reste pas à une température élevée de manière prolongée.

Il a en effet été observé que le conduit 5 pouvait présenter des dépôts solides d'agents chimiques de traitement. Ces résidus ont un point d'auto inflammation d'environ 450 °C. Si, du fait de l'interruption de l'alimentation en liquide, le flux de gaz chaud pénétrant dans le conduit d'éjection n'est plus refroidi pendant une période significative, ces résidus peuvent s'enflammer. Grâce à l'invention, la seconde source de liquide prend rapidement le relais de la première source de liquide, de telle sorte que le flux de gaz n'atteint jamais la température de 450°C, ou ne l'atteint que de manière transitoire et est immédiatement ramené à une température inférieure à 450 °C dès que la seconde source de liquide prend le relais de la première.

Il est particulièrement avantageux d'utiliser une sonde de température pour la détection de l'interruption totale ou partielle du flux de liquide venant de la première source, compte tenu du fait qu'on cherche à empêcher la montée en température du gaz et l'auto inflammation des résidus.

Les moyens pour fournir au conduit d'éjection un flux de secours de liquide à partir de la seconde source peuvent être réalisés de manière particulièrement économique sous la forme d'une vanne trois voies intercalée sur le conduit d'aspiration de la pompe volumétrique, dont une entrée est raccordée par un tuyau d'aspiration à la seconde source de liquide. Ainsi, il n'est pas nécessaire de prévoir une seconde pompe en secours de la première.

Il est particulièrement avantageux de prévoir que la seconde source de liquide est un réservoir étanche et que les moyens pour fournir un conduit d'éjection un flux de secours de liquide à partir de la seconde source comprennent un conduit de mise en pression raccordant la sortie de refoulement de la soufflante au ciel du réservoir étanche et un conduit d'injection raccordant le réservoir étanche au conduit d'éjection. Ainsi, quand l'interruption du flux de liquide injecté à partir de la première source est due à une défaillance de la pompe doseuse, la seconde source de liquide peut prendre le relais en dépit de la défaillance de la pompe. De même, si l'interruption résulte du désamorçage de la pompe, le passage à la seconde source de liquide est également plus facile car il n'y a pas à réamorcer la pompe.

Le dispositif de thermonébulisation peut présenter de multiples variantes.

L'ensemble de production d'un flux de gaz chaud sous pression n'est pas nécessairement constitué d'un ventilateur couplé à une résistance électrique. Le ventilateur peut être remplacé par un compresseur ou tout autre type d'organe permettant de fournir un gaz sous pression. L'organe de chauffage peut ne pas être une résistance électrique, mais être un réchauffeur à gaz, ou un réchauffeur de tout type adapté.

La sonde permettant de détecter une interruption du flux de liquide arrivant de la première source peut ne pas être une sonde de température. Cet organe peut être une sonde de mesure de débit de liquide dans le conduit de liaison 45. La sonde pourrait être également une sonde de débit de liquide dans le conduit de refoulement 41 ou dans le conduit d'aspiration 39 associé à la pompe volumétrique. Il serait également possible d'utiliser dans ce but une sonde de mesure de niveau de liquide à l'intérieur du réservoir 7, associé à des moyens pour calculer le débit de liquide injecté à partir de la variation de niveau du réservoir 7 en fonction du temps.

La seconde source de liquide n'est pas forcément un réservoir. La seconde source peut être un réseau de fourniture d'eau potable ou industrielle, un puits, une citerne, ou toute autre source contenant une quantité d'eau suffisante. La seconde source est de préférence une source d'eau pure, mais pourrait également être une source d'un autre type de liquide sous réserve que ce liquide, une fois pulvérisé sur des fruits et légumes, ne crée pas de problèmes.

La vanne trois voies interposée sur le conduit d'aspiration de la pompe volumétrique pourrait être remplacé par deux vannes deux voies, une vanne deux voies intercalée sur le conduit d'aspiration de la pompe volumétrique et une vanne deux voies intercalée sur le tuyau d'aspiration reliant la seconde source de liquide au conduit d'aspiration.

Les moyens pour fournir un flux de secours de liquide au conduit d'éjection pourraient alternativement comprendre une pompe volumétrique de secours dont l'aspiration est raccordée à la seconde source de liquide et dont le refoulement est raccordé au conduit de liaison. Alternativement, la pompe de secours pourrait être raccordée à une entrée de liquide du conduit d'éjection qui lui est propre, et qui est distincte de l'entrée de liquide raccordée à la première source de liquide.

Dans le second mode de réalisation de l'invention, le conduit d'injection peut ne pas être raccordé à une seconde entrée de liquide du conduit d'éjection, mais plutôt au conduit de liaison. L'injection de liquide venant de la seconde source est ainsi réalisée par la même entrée de liquide que l'injection de liquide venant de la première source.

Dans le second mode de réalisation, l'électrovanne intercalée sur le conduit de mise sous pression peut être remplacée par une électrovanne intercalée sur le conduit d'injection.

## Revendications

1. Dispositif de thermonébulisation d'un liquide, le dispositif comprenant :
- un ensemble (3) de production d'un flux de gaz chaud sous pression, présentant une sortie de gaz chaud (31) ;
- un conduit d'éjection (5), présentant une entrée de gaz chaud raccordée à la sortie de gaz chaud (31) de l'ensemble de production (3), et une sortie d'éjection (33) d'un brouillard de liquide ;
- une première source de liquide (7) ;
- des moyens (9) pour injecter dans le conduit d'éjection (5) un flux dosé de liquide à partir de la première source de liquide (7) ;
- une sonde (11) pour détecter une interruption totale ou partielle du flux dosé de liquide injecté dans le conduit d'éjection (5) à partir de la première source de liquide (7) ;
**caractérisé en ce qu'**il comprend :
- une seconde source de liquide (13) ;
- des moyens (15) pour injecter dans le conduit d'éjection (5) un flux de secours de liquide à partir de la seconde source de liquide (13) quand la sonde (11) détecte une interruption totale ou partielle du flux dosé de liquide injecté dans le conduit d'éjection (5) à partir de la première source de liquide (7).

2. Dispositif selon la revendication 1, **caractérisé en ce que** les moyens (3) pour injecter dans le conduit d'éjection (5) un flux dosé de liquide à partir de la première source de liquide (7) comprennent un organe doseur de liquide (37), présentant une entrée d'aspiration de liquide raccordée à la première source de liquide (7) et une sortie de refoulement de liquide raccordée à une entrée (35) de liquide du conduit d'éjection (5), les moyens (15) pour injecter dans le conduit d'éjection (5) un flux de secours de liquide à partir de la seconde source de liquide (13) comprenant un organe à vanne (51) apte à sélectivement raccorder l'entrée d'aspiration de liquide de l'organe doseur (37) à la seconde source de liquide (13).

3. Dispositif selon la revendication 2, **caractérisé en ce que** la sonde (11) est une sonde de température apte à mesurer la température courante du gaz dans le conduit d'éjection (5) en aval de l'entrée de liquide (35).

4. Dispositif selon la revendication 3, **caractérisé en ce qu'**il comprend un calculateur (49) apte à recueillir la température courante du gaz mesurée par la sonde (11), à comparer cette température courante avec une valeur maximale prédéterminée, et à commander à l'organe à vanne (51) de raccorder l'entrée d'aspiration de liquide de l'organe doseur (37) à la seconde source de liquide (13) quand la température courante est supérieure à ladite valeur maximale prédéterminée.

5. Dispositif selon la revendication 3 ou 4, **caractérisé en ce que** l'organe à vanne (51) comprend une vanne trois voies comportant une première entrée de liquide raccordée à la première source de liquide (7), une seconde entrée de liquide raccordée à la seconde source de liquide (13) et une sortie raccordée à l'entrée d'aspiration de liquide de l'organe doseur (37).

6. Dispositif selon l'une quelconque des revendications 1 à 5, **caractérisé en ce que** la première source de liquide (7) est une source d'un liquide contenant un agent chimique de traitement, la seconde source de liquide (13) étant une source d'un liquide dépourvu dudit agent chimique de traitement.

7. Dispositif selon l'une quelconque des revendications 1 à 6, **caractérisé en ce que** la seconde source de liquide (13) est une source d'eau.

8. Dispositif selon l'une quelconque des revendications 1 à 7, **caractérisé en ce que** l'ensemble (3) de production d'un flux de gaz chaud sous pression comprend une soufflante (17), pourvue d'une entrée d'aspiration de gaz et d'une sortie (21) de refoulement de gaz sous pression, et un organe de chauffage (19) du gaz sous pression, présentant une entrée de gaz froid raccordée à la sortie de refoulement (21) du ventilateur (17), et une sortie constituant la sortie de gaz chaud (31).

9. Dispositif selon la revendication 8, **caractérisé en ce que** la seconde source de liquide (13) est un réservoir sensiblement étanche à l'air, les moyens (15) pour injecter dans le conduit d'éjection (5) un flux de secours de liquide à partir de la seconde source de liquide (13) comprenant un conduit de mis sous pression (61) raccordant la sortie de refoulement (21) de la soufflante (17) à un ciel (71) de la seconde source de liquide (13), et un conduit d'injection (63) raccordant la seconde source de liquide (13) à une entrée de liquide (35, 65) du conduit d'éjection (5).

10. Procédé thermonébulisation d'un liquide, ce procédé comprenant les étapes suivantes :
- créer un courant de gaz chaud sous pression ;
- injecter un flux de liquide dans le gaz chaud sous pression à partir d'une première source de liquide (7) ;
**caractérisé par** les étapes suivantes :
- détecter une interruption totale ou partielle du flux de liquide arrivant de la première source de liquide (7) ;
- injecter un flux de liquide dans le gaz sous pression chauffé à partir d'une seconde source de liquide (13) quand une interruption totale ou partielle du flux de liquide arrivant de la première source de liquide (7) est détectée.

## Claims

1. Device for the thermal fogging of a liquid, said device comprising:
- an unit (3) for producing a stream of pressurised hot gas, having a hot gas outlet (31);
- an ejection pipe (5), having a hot gas inlet connected to the hot gas outlet (31) of the production unit (3), and an ejection outlet (33) for a mist of liquid;
- a first source of liquid (7);
- means (9) for injecting a measured flow of liquid into the ejection pipe (5) from the first source of liquid (7);
- a sensor (11) for detecting a total or partial interruption of the measured flow of liquid injected into the ejection pipe (5) from the first source of liquid (7);
**characterized in that** it comprises:
- a second source of liquid (13);
- means (15) for injecting an emergency flow of liquid into the ejection pipe (5) from the second source of liquid (13) when the senior (11) detects a total or partial interruption of the measured flow of liquid injected into the ejection pipe (5) from the first source of liquid (7).

2. Device according to claim 1, wherein the means (3) for injecting a measured flow of liquid into the ejection pipe (5) from the first source of liquid (7) comprise a liquid measurement device (37), having a liquid suction inlet connected to the first source of liquid (7) and a liquid delivery outlet connected to a liquid inlet (35) of the ejection pipe (5), the means (15) for injecting an emergency flow of liquid into the ejection pipe from the second source of liquid (13) comprising a valve component (51) suitable for selectively connecting the liquid suction inlet of the measurement device (37) to the second source of liquid (13).

3. Device according to claim 2, wherein the sensor (11) is a temperature senior suitable for measuring the current temperature of the gas in the ejection pipe (5) downstream of the liquid inlet (35).

4. Device according to claim 3, wherein it comprises a computer (49) suitable for taking the current temperature of the gas measured by the sensor (11), comparing this current temperature with a predetermined maximum value, and actuating the valve component (51) to connect the liquid suction inlet of the measurement device (37) to the second source of liquid (13) when the current temperature is higher than said predetermined maximum value.

5. Device according to claim 3 or 4, wherein the valve component (51) comprises a three-way valve comprising a first liquid inlet connected to the first source of liquid (7), a second liquid inlet connected to the second source of liquid (13) and an outlet connected to the liquid suction inlet of the measurement device (37).

6. Device according to any claims 1 to 5, wherein the first source of liquid (7) is a source of a liquid containing a chemical treatment agent, the second source of liquid (13) being a source of a liquid that does not contain said chemical treatment agent.

7. Device according to any of claims 1 to 6, wherein the second source of liquid (13) is a source of water.

8. Device according to any of claims 1 to 7, wherein the unit (3) for producing a stream of pressurised hot gas comprises a fan (17), provided with a gas suction inlet and a pressurised gas delivery outlet (21), and a device (19) for heating the gas under pressure, having a cold gas inlet connected to the delivery outlet (21) of the fan (17), and an outlet (31) forming the hot gas outlet

9. Device according to claim 8, wherein the second source of liquid (13) is a substantially airtight tank, means (15) for injecting an emergency flow of liquid into the ejection pipe (5) from the second source of liquid (13) comprising a pressurising pipe (61) connecting the delivery outlet (21) of the fan (17) to a crown (71) of the second source of liquid (13), and an injection pipe (63) connecting the second source of liquid (13) to a liquid inlet (35, 65) of the ejection pipe (5).

10. Method for the thermal fogging of a liquid, said method comprising the following steps:
- creating a current of pressurised hot gas;
- injecting a flow of liquid into the pressurised hot gas from a first source of liquid (7); **characterised by** the following steps:
- detecting a total or partial interruption of the flow of liquid coming from the first source of liquid (7);
- injecting a flow of liquid into the heated pressurised gas from a second source of liquid when a total or partial interruption of the flow of liquid coming from the first source of liquid (7) is detected.

## Patentansprüche

1. Vorrichtung zum thermischen Vernebeln einer Flüssigkeit, wobei die Vorrichtung aufweiset:
- eine Baugruppe (3) zum Erzeugen eines Heißgasstromes unter Druck, die einen Heißgas-Ausgang (31) aufweist,
- eine Ausstoßleitung (5), die einen Heißgas-Eingang, der mit dem Heißgas-Ausgang (31) der Erzeugungsbaugruppe (3) verbunden ist, und einen Ausgang (33) zum Ausstoßen eines Flüssigkeitsnebels aufweist,
- eine erste Flüssigkeitsquelle (7),
- Mittel (9) zum Einspritzen eines dosierten Stromes von Flüssigkeit aus der ersten Flüssigkeitsquelle (7) in die Ausstoßleitung (5),
- einen Fühler (11), um eine vollständige oder teilweise Unterbrechung des aus der ersten Flüssigkeitsquelle (7) in die Ausstoßleitung (5) eingespritzten dosierten Stromes von Flüssigkeit zu erfassen,
**dadurch gekennzeichnet, dass** sie aufweist:
- eine zweite Flüssigkeitsquelle (13),
- Mittel (15), um aus der zweiten Flüssigkeitsquelle (13) einen Hilfsflüssigkeitsstrom in die Ausstoßleitung (5) einzuspritzen, wenn der Fühler (11) eine vollständige oder teilweise Unterbrechung des aus der ersten Flüssigkeitsquelle (7) in die Ausstoßleiting (5) eingespritzten dosierten Flüssigkeitsstromes detektiert.

2. Vorrichtung gemäß Anspruch 1, **dadurch gekennzeichnet, dass** die Mittel (3) zum Einspritzen eines dosierten Flüssigkeitsstromes aus der ersten Flüssigkeitsquelle (7) in die Ausstoßleitung (5) ein Flüssigkeits-Dosierungsmittel (37) aufweisen, das aufweist: einen Eingang zum Ansaugen von Flüssigkeit, der mit der ersten Flüssigkeitsquelle (7) verbunden ist, und einen Ausgang zum Auslassen von Flüssigkeit, der mit einem Eingang (35) für die Flüssigkeit aus der Ausstoßleitung (5) verbunden ist, wobei die Mittel (15) zum Einspritzen eines Hilfsflüssigkeitsstromes aus der zweiten Flüssigkeitsquelle (13) in die Ausstoßleitung (5) ein Ventilmittel (51) aufweisen, das in der Lage ist, den Flüssigkeits-Ansaugeingang des Dosierungsmittels (37) wahlweise mit der zweiten Flüssigkeitsquelle (13) zu verbinden.

3. Vorrichtung gemäß Anspruch 2, **dadurch gekennzeichnet, dass** der Fühler (11) ein Temperaturfühler ist, der in der Lage ist, die aktuelle Temperatur des Gases in der Ausstoßleitung (5) stromabwärts von dem Flüssigkeitseingang (35) zu messen.

4. Vorrichtung gemäß Anspruch 3, **dadurch gekennzeichnet, dass** sie einen Rechner (49) aufweist, der in der Lage ist, die von dem Fühler (11) gemessene aktuelle Temperatur des Gases aufzunehmen, die aktuelle Temperatur mit einem vorbestimmten Maximalwert zu vergleichen und dem Ventilmittel (51) zu befehlen, den Flüssigkeits-Ansaugeingang des Dosierungsmittels (37) mit der zweiten Flüssigkeitsquelle (13) zu verbinden, wenn die aktuelle Temperatur größer als der vorbestimmte Maximalwert ist.

5. Vorrichtung gemäß Anspruch 3 oder 4, **dadurch gekennzeichnet, dass** das Ventilmittel (51) ein Dreiwegeventil aufweist, das aufweist: einen ersten Flüssigkeitseingang, der mit der ersten Flüssigkeitsquelle (7) verbunden ist, einen zweiten Flüssigkeitseingang, der mit der zweiten Flüssigkeitsquelle (13) verbanden ist, und einen Ausgang, der mit dem Flüssigkeits-Ansaugeingang des Dosierungsmittels (37) verbunden ist.

6. Vorrichtung gemäß irgendeinem der Ansprüche 1 bis 5, **dadurch gekennzeichnet, dass** die erste Flüssigkeitsquelle (7) eine Quelle einer Flüssigkeit ist, die eine chemische Behändlungssubstanz enthält, wobei die zweite Flüssigkeitsquelle (13) eine Quelle einer Flüssigkeit ist, die die chemische Behandlungssubstanz nicht enthält.

7. Vorrichtung gemäß irgendeinem der Ansprüche 1 bis 6, **dadurch gekennzeichnet, dass** die zweite Flüssigkeitsquelle (13) eine Wasserquelle ist.

8. Vorrichtung gemäß irgendeinem der Ansprüche 1 bis 7, **dadurch gekennzeichnet**, das die Baugruppe (3) zum Erzeugern eines Heißgasstromes unter Druck aufweiset: ein Geblase (17), das einen Eingang zum Ansaugen von Gas und einen Ausgang (21) zum Auslassen von Gas unter Druck aufweist, und ein Mittel (19) zum Erhitzen des Gases unter Druck, das einen mit dem Auslassausgang (21) des Lüfters (17) verbundenen Kaltgas-Eingang und einen den Heißgas-Ausgang (31) bildenden Ausgang aufweist.

9. Vorrichtung gemäß Anspruch 8, **dadurch gekennzeichnet, dass** die zweite Flüssigkeitsquelle (13) ein im Wesentlichen luftdichter Behälter ist, wobei die Mittel (15) zum Einspritzen eines Hilfsflüssigrkeitsstromes aus der zweiten Flüssigkeitsquelle (13) in die Ausstoßleitung (5) aufweisen: eine Druckbeaufschlagungsleitung (61), die den Auslassausgang (21) des Lüfters (17) mit einem oberen Abschnitt (71) der zweiten Flüssigkeitsquelle (13) verbinder, und eine Einspritzleitung (63), die die zweite Flüssigkeitsquelle (13) mit einem Flüssigkeitseingang (35, 65) der Ausstoßleitung (5) verbindet.

10. Verfahren zum thermischen Vernebeln einer Flüssigkeit, wobei das Verfahren die folgenden Schritte aufweist:
Erzeugen eines Heißgasstromes unter Druck,
- Einspritzen eines Flüssigkeitsstromes in das Heißgas unter Druck aus einer ersten Flüssigkeitsquelle (7),
**gekennzeichnet durch** die folgenden Schritte:
- Detektieren einer vollständigen oder teilweisen Unterbrechung des aus der ersten Flüssigkeitsquelle (7) ankommenden Flüssigkeitsstromes,
- Einspritzen eines Flüssigkeitsstromes in das Heißgas unter Druck aus einer zweiten Flüssigkeitsquelle (13), wenn eine vollständige oder teilweise Unterbrechung des aus der ersten Flüssigkeitsquelle (7) ankommenden Flüssigkeitsstromes detektiert wird.
